(19) **Europäisches Patentamt European Patent Office Office européen des brevets**

(11) **EP 4 057 264 B1**

(12) **EUROPEAN PATENT SPECIFICATION**

(45) Date of publication and mention
of the grant of the patent:
**04.02.2026 Bulletin 2026/06**

(21) Application number: **19951742.6**

(22) Date of filing: **03.12.2019**

(51) International Patent Classification (IPC):
**G09F 11/04** (2006.01)   **G09F 11/02** (2006.01)
**G09F 11/10** (2006.01)   **G09F 9/33** (2006.01)
**G09F 9/37** (2006.01)   **G09F 19/02** (2006.01)
**G02B 30/54** (2020.01)   **G09F 19/12** (2006.01)

(52) Cooperative Patent Classification (CPC):
**G09F 9/33; G09F 9/37; G09F 19/02; G09F 19/12;**
G02B 30/54; G09F 11/02; G09F 27/005;
G09F 27/008; G09F 2011/0027

(86) International application number:
**PCT/KR2019/016920**

(87) International publication number:
**WO 2021/091015 (14.05.2021 Gazette 2021/19)**

(54) **ROTATING TYPE DISPLAY APPARATUS USING SEMICONDUCTOR LIGHT EMITTING DEVICE**

ROTIERENDE ANZEIGEVORRICHTUNG MIT LICHTEMITTIERENDER
HALBLEITERVORRICHTUNG

APPAREIL D'AFFICHAGE DE TYPE ROTATIF UTILISANT UN DISPOSITIF ÉMETTEUR DE
LUMIÈRE À SEMI-CONDUCTEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2019 KR 20190142644**

(43) Date of publication of application:
**14.09.2022 Bulletin 2022/37**

(73) Proprietor: **LG Electronics Inc.**
**SEOUL 07336 (KR)**

(72) Inventors:
• **KANG, Seokhoon**
**Seoul 06772 (KR)**
• **KANG, Yongdae**
**Seoul 06772 (KR)**
• **MOON, Euna**
**Seoul 06772 (KR)**

(74) Representative: **Vossius & Partner**
**Patentanwälte Rechtsanwälte mbB**
**Siebertstraße 3**
**81675 München (DE)**

(56) References cited:
**JP-A- 2001 236 801     JP-A- 2007 165 057
KR-A- 20190 120 553    KR-B1- 100 985 222
KR-B1- 101 741 097     US-A1- 2002 005 826
US-A1- 2004 222 428**

## Description

## TECHNICAL FIELD

The present disclosure is applicable to display-device-related technical fields, and relates to a rotating display device using a light-emitting diode (LED), which is a semiconductor light-emitting element.

## BACKGROUND ART

KR 2019 012 0553 A relates to a rotational ad device using afterimage effects, which can recognize constantly ad images or videos by LEDs even though angles facing rotational wings are changed.
US 2004 222428 A1 relates to a linear array of red LEDs being provided so as to extend in a direction substantially perpendicular to a direction in which a swing-type display device is swung, and a linear array of green LEDs being further provided, the red LEDs and green LEDs being arranged in pairs of two.

Recently, in the field of display technology, display devices having excellent characteristics, such as thinness and flexibility, have been developed. Meanwhile, currently commercialized major displays are represented by a liquid crystal display (LCD) and an organic light-emitting diode (OLED).

However, the LCD has problems in which the response time is slow and it is difficult to realize flexibility, and the OLED has problems in which the lifespan thereof is short and the production yield thereof is low.

Meanwhile, a light-emitting diode (LED), which is a well-known semiconductor light-emitting element that converts current into light, has been used as a light source for displaying an image in electronic devices including information communication devices together with a GaP:N-based green LED, starting with commercialization of a red LED using a GaAsP compound semiconductor in 1962. Therefore, a method of solving the above-described problems by implementing a display using the semiconductor light-emitting element may be proposed. Such a light-emitting diode has various advantages, such as a long lifespan, low power consumption, excellent initial driving characteristics, and high vibration resistance, compared to a filament-based light-emitting element.

Meanwhile, when a light-emitting module in which light-emitting elements are arranged in one dimension is rotated and driven at a high speed according to the angle thereof, various letters, graphics, and videos may be recognized by a human due to an afterimage effect.

In general, when still images are continuously displayed at a rate of 24 or more sheets per second, a viewer recognizes the same as a video. A conventional image display device, such as a CRT, an LCD, or a PDP, displays still images at a rate of 30 to 60 frames per second, so a viewer is capable of recognizing the same as a video. As the number of still images displayed per second increases, a viewer may experience smoother video.

A light source device of a typical rotating display device may include subpixels protected by a molded portion. The molded portion may have a gently curved dome shape.

A light-emitting element may have a certain viewing angle (or a directivity angle). In other words, light may be emitted from the light-emitting element within a certain viewing angle (a directivity angle). The viewing angle of the light-emitting element may be, for example, 120 degrees.

When a typical rotating display device including a light source device is operated, the light source device is rotated, whereby, temporarily, some subpixels are visible to a viewer but other subpixels are not visible to the viewer.

Subsequently, when the light source device is rotated further, red, green, and blue light are mixed with one another, and the light of mixed colors is visible to a the viewer.

For the above-mentioned reason, the times at which each of the red, green, and blue light is visible to the viewer does not exactly coincide with the others when the light source device of the typical rotating display device is operated.

Consequently, the viewer may experience a phenomenon in which some of the colors of the image are more intense at a certain time point or over a certain time period. For example, the image may be sensed as a red color or a blue color.

Accordingly, there is a need for a method of alleviating this phenomenon.

## DISCLOSURE

## TECHNICAL TASK

A technical task of the present disclosure is to provide a rotating display device using a semiconductor light-emitting element capable of preventing variation in the color of the rotating display device.

Another technical task of the present disclosure is to provide a rotating display device using a semiconductor light-emitting element capable of allowing the light emitted from the light source device thereof to be directed only in the forward direction of the light source device, and not in a lateral direction of the light source device.

## TECHNICAL SOLUTIONS

A rotating display device according to the invention is disclosed in claim 1.

The partition wall may be positioned in a direction in which the light source device is rotated.

The partition wall may be positioned on two lateral sides of each of the pixels.

The partition wall, which is positioned on the two lateral sides of each of the pixels, may be positioned relative to each of the pixels in a direction in which the light source device is rotated and in a direction opposite the direction in which the light source device is rotated.

The partition wall may be continuously positioned along the light-emitting element array.

The partition wall may have a black color.

## ADVANTAGEOUS EFFECTS

An embodiment of the present disclosure conveys the following effects.

According to the present disclosure, it is possible to block light emitted from a lateral surface of a light-emitting element such that the light is emitted from the light-emitting element only from the front side, toward a viewer, to thus prevent variation in color caused by a change in an angle at which a viewer views the light-emitting element.

Accordingly, there is an effect of obtaining a display capable of realizing consistent color regardless of the position of the viewer.

Furthermore, the present disclosure conveys additional technical effects that have not been mentioned herein, and these effects will be understood by those skilled in the art from the entire matter of the specification and the accompanying drawings.

## DESCRIPTION OF DRAWINGS

FIG. 1 is a perspective view illustrating a rotating display device according to a first embodiment of the present disclosure;

FIG. 2 is a perspective view illustrating a rotating display device according to a second embodiment of the present disclosure;

FIG. 3 is a perspective view showing the front surface of a light source device according to the present disclosure.

FIG. 4 is a perspective view showing the rear surface of the light source device according to the present disclosure.

FIG. 5 is an enlarged view of portion A in FIG. 3.

FIG. 6 is a cross-sectional view of the light source device according to the present disclosure.

FIG. 7 is a block diagram of the rotating display device according to the present disclosure.

FIG. 8 is a perspective view illustrating the front surface of the light source device according to the second embodiment of the present disclosure;

FIG. 9 is a plan view illustrating the front surface of the light source device according to the second embodiment of the present disclosure;

FIG. 10 is a cross-sectional view taken along line B-B in FIG. 9;

FIG. 11 is a cross-sectional view illustrating a light source device of a typical rotating display device;

FIGs. 12 and 13 are schematic views illustrating the state in which a viewer views the light source device of the typical rotating display device over time;

FIG. 14 is a graph illustrating a pattern of a directivity angle when a viewer views the light source device of the typical rotating display device;

FIG. 15 is a cross-sectional view illustrating a light source device according to a third embodiment of the present disclosure;

FIG. 16 is a graph illustrating a pattern of a directivity angle when a viewer views the light source device according to the second embodiment of the present disclosure; and

FIG. 17 is a graph illustrating a pattern of a directivity angle when a viewer views the light source device according to the first embodiment of the present disclosure.

## BEST MODE FOR DISCLOSURE

Reference will now be made in detail to embodiments of the present disclosure, examples of which are illustrated in the accompanying drawings. Wherever possible, the same reference numbers will be used throughout the drawings to refer to the same or like parts, and a redundant description thereof will be omitted. As used herein, the suffixes "module" and "unit" are added or used interchangeably to facilitate preparation of this specification, and are not intended to suggest distinct meanings or functions. In describing embodiments disclosed in this specification, relevant well-known technologies may not be described in detail in order to avoid obscuring the subject matter of the embodiments disclosed in this specification.

Furthermore, although the drawings are separately described for simplicity, embodiments implemented by combining two or more drawings are also within the scope of the present disclosure.

In addition, when an element such as a layer, a region, or a substrate is described as being "on" another element, it is to be understood that the element may be directly on the other element, or there may be an intermediate element between them.

The display device described herein conceptually includes all display devices that display information with a unit pixel or a set of unit pixels. Therefore, the term "display device" may be applied not only to finished products but also to parts. For example, a panel corresponding to a part of a digital TV also independently corresponds to the display device in the present specification. Such finished products include a mobile phone, a smartphone, a laptop computer, a digital broadcasting terminal, a personal digital assistant (PDA), a portable multimedia player (PMP), a navigation system, a slate PC, a tablet PC, an Ultrabook, a digital TV, a desktop computer, and the like.

However, it will be readily apparent to those skilled in the art that the configuration according to the embodiments described herein is also applicable to new products to be developed later as display devices.

In addition, the term "semiconductor light-emitting element" mentioned in this specification conceptually includes an LED, a micro LED, and the like, and may be used interchangeably therewith.

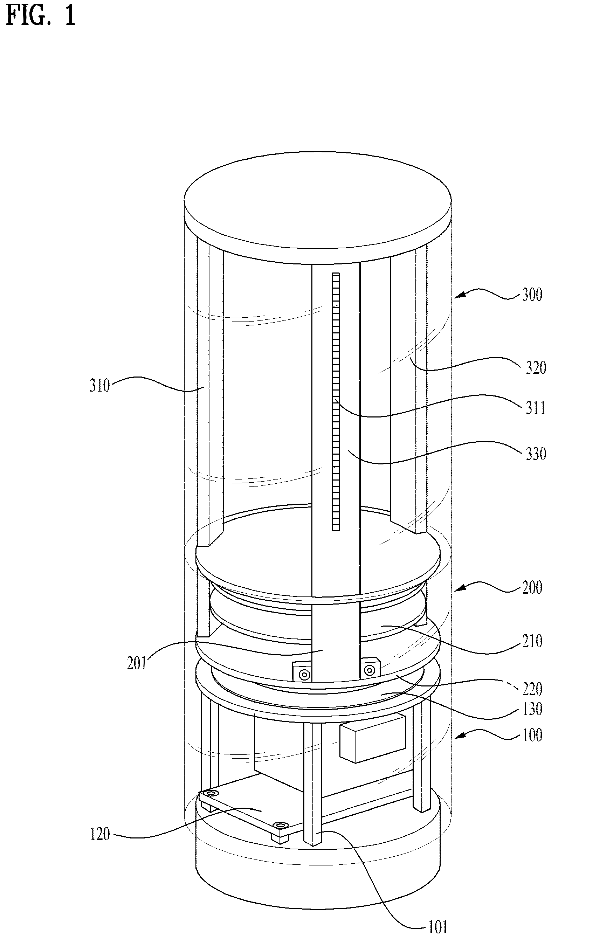

FIG. 1 is a perspective view illustrating a rotating display device according to a first embodiment of the present disclosure.

FIG. 1 illustrates a cylindrical rotating display device in which light-emitting element arrays 311 are respectively and longitudinally provided at one or more panels 310, 320 and 333 disposed along the circumferential surface of the rotating display device. In FIG. 1, only the light-emitting element array 311 that is provided at the front panel 330 is viewable. Although the light-emitting element arrays provided at the left panel 310 and the right panel 320 are not shown in the drawing, light-emitting element arrays each having the same structure may also be applied to the left panel 310 and the right panel 320.

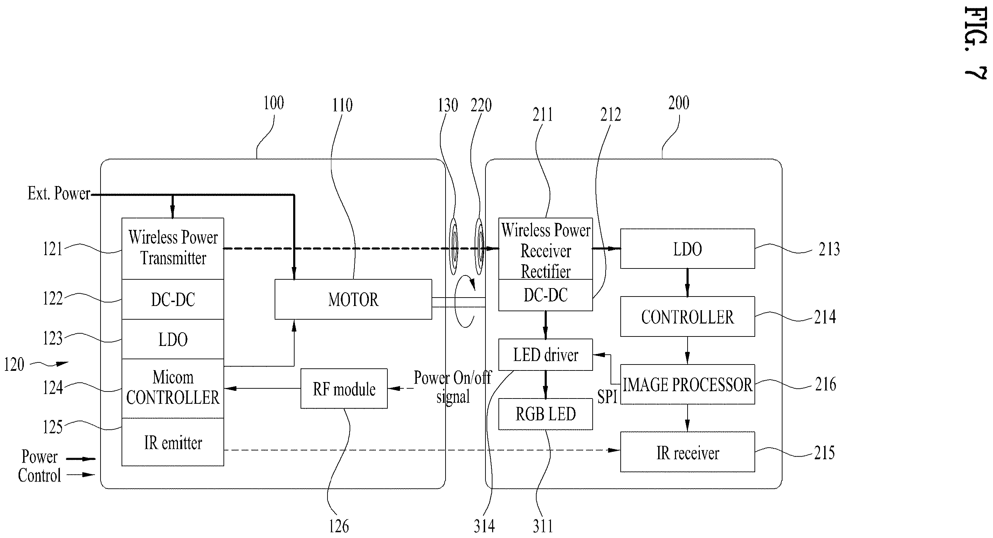

Broadly speaking, the rotating display device may include a fixed portion 100 including a motor 110 (see FIG. 7), a rotary portion 200, which is positioned on the fixed portion 100 and is rotated by the motor 110, and a light source device 300, which is coupled to the rotary portion 200 and includes the light-emitting element arrays 311 mounted on the panel 310, 320, and 330 (hereinafter, referred to as "first panels") to embody a display configured to display an after-image by rotation thereof.

Here, the light source device 300 may include the light-emitting element arrays 311, which are respectively and longitudinally mounted on the one of more bar-shaped first panels 310, 320 and 330, which are disposed on the cylindrical outer circumferential surface at regular intervals.

In FIG. 1, the light source device 300 may include three first panels 310, 320 and 330, each of which includes the light-emitting element array 311 (hereinafter, referred to as a "first light-emitting element array"). However, this embodiment is only one example, and the light source device 300 may include one or more panels.

The first light-emitting element array 311 may be constructed such that pixels are longitudinally arranged on each of the first panels 310, 320 and 330. Here, subpixels constituting each of the pixels are arranged in a direction perpendicular to the longitudinal direction.

The subpixels of each of the pixels may sequentially emit light in the pixel.

A detailed description of the first light-emitting element array 311 included in the light source device 300 will be given later.

The first panels 310, 320 and 330, which constitutes the light source device 300, may be embodied as printed circuit boards (PCBs). In other words, each of the first panels 310, 320 and 330 may have the function of a printed circuit board. The light-emitting array of each of the first panels 310, 320 and 330 may constitute a unit pixel and may be arranged in the longitudinal direction of the panel.

The panel equipped with the light-emitting element array may be rotated so as to realize a display using an after-image. Realization of the after-image will be described in detail later.

Although the light source device 300 may be constituted by a plurality of first panels 310, 320 and 330, as described above, the light source device 300 may also be constituted by a single panel equipped with a light-emitting array. When the light source device 300 is constituted by a plurality of panels, as shown in FIG. 1, a plurality of subimages, which are allocated to the plurality of panels, may realize one single frame image. Accordingly, the light source device 300 may be rotated at a rotational speed lower than in the case in which the same frame is realized by a single panel.

The fixed portion 100 may constitute a frame structure. In other words, the fixed portion 100 may include a plurality of frames 101, which are designed to be coupled to each other so as to constitute the fixed portion 100.

The frame structure may provide a space in which the motor 110 is mounted and a space in which a power supply 120, an RF module 126 (see FIG. 7), and the like are mounted.

Furthermore, the fixed portion 100 may be provided with a weight (not shown) configured to reduce the influence of high-speed rotation of the rotary portion 200.

Similar to the fixed portion 100, the rotary portion 200 may also constitute a frame structure. In other words, the rotary portion 200 may include a plurality of frames 201, which are designed to be coupled to each other to constitute the rotary portion 200.

The frame structure may provide a space in which a drive circuit 210 configured to drive the first light-emitting array 311 to realize a display is mounted.

The driving shaft of the motor 110 may be fixed to a shaft-fixing portion (not shown) formed at the frames 201 of the rotary portion 200. As a result, the driving shaft of the motor 110 may be positioned coaxially with the rotational center of the rotary portion 200.

The light source device 300 may be fixed to the upper sides of the frames 201.

Power may be transmitted between the fixed portion 100 and the rotary portion 200 via wireless power transmission. To this end, a transmission coil 130 may be mounted on the upper side of the fixed portion 100 so as to transmit power in a wireless manner, and a receiving coil 220 may be mounted on the lower side of the rotary portion 200 at a position that faces the transmission coil 130.

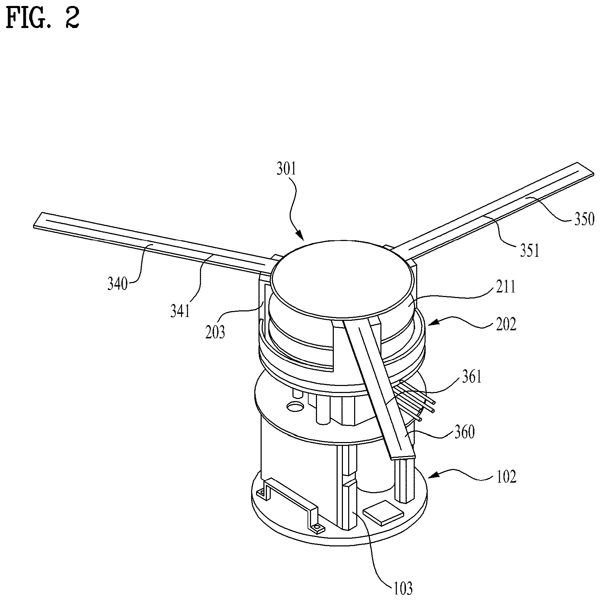

FIG. 2 is a perspective view illustrating a rotating display device according to a second embodiment of the present disclosure.

FIG. 2 illustrates a rotating display device in which light-emitting element arrays 341, 351, and 361 (hereinafter, referred to as a second light-emitting element arrays) are provided at respective blade panels 340, 350 and 360 (hereinafter, referred to as second panels) in the longitudinal directions of the respective panels.

Broadly speaking, the rotary display device may include a fixed portion 102 including a motor 110 (see FIG. 7), a rotary portion 202, which is positioned on the fixed portion 102 and is rotated by a motor 110, and a light source device 301, which includes second light-emitting element arrays 341, 351, and 361 and displays an after-image to realize a display by rotation thereof.

As illustrated in the drawing, the light source device 301 may include one or more second bar-shaped panels 340, 350 and 360, which are radially disposed about the rotational center thereof, and the second light-emitting element arrays 341, 351, and 361, which are respectively disposed on the second panels 340, 350 and 360 in the respective longitudinal directions thereof.

In this way, the light source device 301 may be composed of the second panels 340, 350, and 360 on which the second light-emitting element arrays 341, 351, and 361 are respectively arranged.

Although the light source device 301 may be composed of a plurality of second panels 340, 350 and 360, the light source device 301 may also be composed of a single panel on which a light-emitting element array is disposed. When the light source device 301 is constituted as a plurality of panels, as shown in FIG. 2, a plurality of subimages, which are allocated to the plurality of panels, may realize one single frame image. Accordingly, the light source device 301 may be rotated at a rotational speed lower than the case in which the same frame is realized by a single panel.

Individual pixels may be longitudinally disposed in each of the second light-emitting element arrays 341, 251 and 361 of the second panels 340, 350 and 360. The subpixels constituting each of the pixels are arranged in a direction perpendicular to the longitudinal direction.

A concrete description of the second light-emitting element arrays 341, 351, and 361 provided in the light source device 301 will be made in detail later.

The fixed portion 102 may constitute a frame structure. In other words, the fixed portion 102 may include a plurality of frames 103, which are designed to be coupled to each other to constitute the fixed portion 102.

The frame structure may provide a space, in which the motor 110 is mounted, and a space in which the power supply 120, the RF module 126 (see FIG. 7), and the like are mounted.

Furthermore, the fixed portion 102 may be provided with a weight (not shown) configured to reduce the influence of high-speed rotation of the rotary portion 202.

Similarly to the fixed portion 102, the rotary portion 202 may also constitute a frame structure. In other words, the rotary portion 202 may include a plurality of frames 203, which are designed to be coupled to each other to constitute the rotary portion 202.

The frame structure may provide a space in which the drive circuit 210 configured to drive the second light-emitting arrays 341, 351, and 361 to realize a display, is mounted.

The driving shaft of the motor 110 may be fixed to a shaft-fixing portion (not shown) formed at the frames 203 of the rotary portion 202. As a result, the driving shaft of the motor 110 may be positioned coaxially with the rotational center of the rotary portion 202.

The light source device 301 may be fixed to the upper sides of the frames 201.

Although the second embodiment of the present disclosure has been described heretofore with reference to FIG. 2, the second embodiment may be substantially identical to the first embodiment, with the exception of the difference in the configuration of the light source device 301. Accordingly, the configuration of the first embodiment may be similarly applied to components of the second embodiment that have not been described herein.

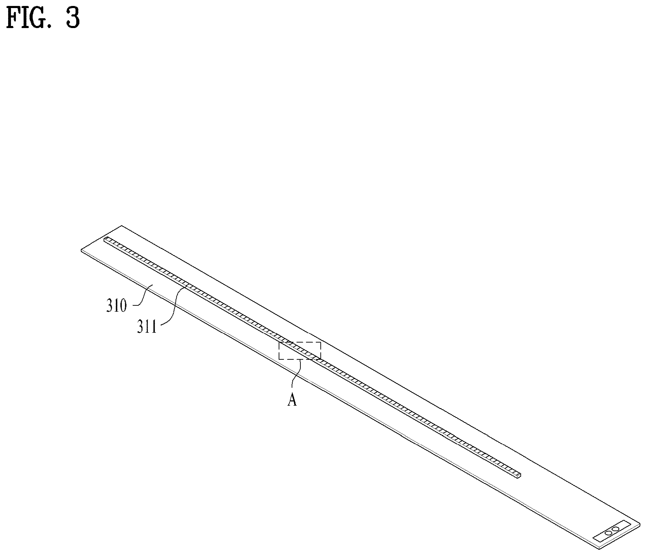

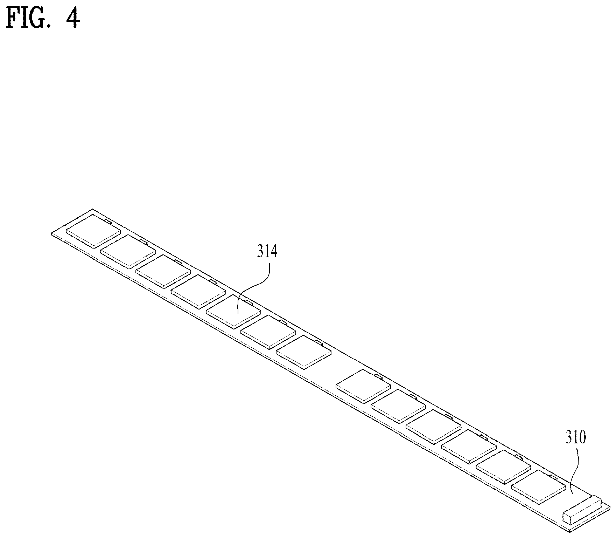

FIG. 3 is a perspective view showing the front surface of a light source device according to the first embodiment of the present disclosure, and FIG. 4 is a perspective view showing the rear surface of the light source device according to the first embodiment of the present disclosure.

Although FIGs. 3 and 4 illustrate the first panel 310 of the first embodiment as an example, the configuration illustrated in FIGs. 3 and 4 may be identically applied not only to the other panels 320 and 330 but also to the panels 340, 350, and 360 of the second embodiment. That is, the light source device of the first embodiment and the light source device of the second embodiment may have the same configuration.

In other words, each of the first light-emitting element arrays 311 and each of the second light-emitting element arrays 341, 351, and 361 may have the same structure. Hereinafter, the light source device will be described based on the first light-emitting element array 311.

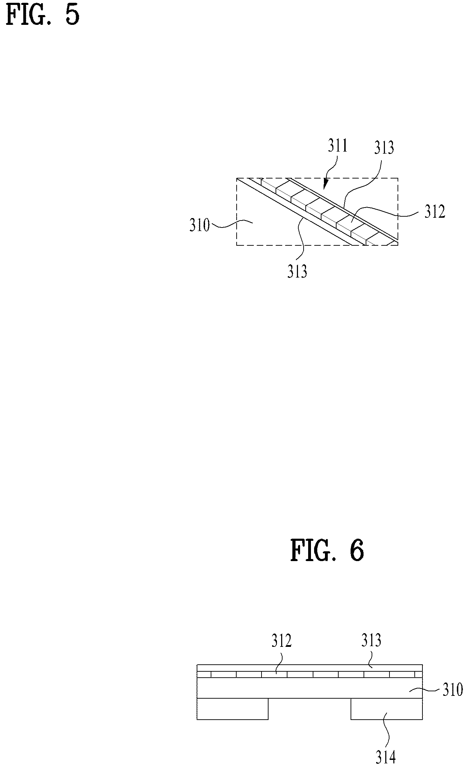

FIG. 3 illustrates one panel 310 forming the light source device 300. As mentioned above, the panel 310 may be a printed circuit board (PCB). A plurality of light-emitting elements 312 (refer to FIG. 5) may be mounted on the panel 310 so as to be disposed in one direction to form pixels, thereby constituting the light-emitting element array 311. Here, a light-emitting diode (LED) may be used as the light-emitting element.

That is, the light-emitting elements 312 are disposed in one direction on one panel 310 to form individual pixels, with the result that the light-emitting element array 311 may be provided so as to be linearly mounted.

FIG. 4 illustrates the rear surface of the panel 310. Drivers 314 for driving the light-emitting elements 312 may be mounted on the rear surface of the panel 310, which constitutes the light source device.

Since the drivers 314 are mounted on the rear surface of the panel 310, as described above, the drivers 314 may not interfere with a light-emitting surface, the influence on light emission from the light sources (the light-emitting elements) 312 due to interference may be minimized, and the area of the panel 310 may be minimized. The panel 310, having a small area, may improve the transparency of the display.

Meanwhile, the front surface of the panel 310, on which the light-emitting element array 311 is mounted, may be processed into a dark color (e.g. black) in order to improve the contrast ratio and the color expression of the display, thereby maximizing the effect of the light sources.

FIG. 5 is an enlarged view of portion A in FIG. 3, and FIG. 6 is a cross-sectional view of the light source device according to the present disclosure.

Referring to FIG. 5, it can be seen that the individual light-emitting elements 312 are mounted linearly in one direction (the longitudinal direction of the panel). In this case, a protective portion 313 may be located outside the light-emitting elements 312 in order to protect the light-emitting elements 312.

Red, green, and blue light-emitting elements 312 may form one pixel in order to realize natural colors, and the individual pixels may be mounted in one direction on the panel 310.

Referring to FIG. 6, the light-emitting elements 312 may be protected by the protective portion 313. Further, as described above, the drivers 314 may be mounted on the rear surface of the panel 310, and may drive the light-emitting elements 312 in units of pixels or subpixels. In this case, one driver 314 may individually drive at least one pixel.

FIG. 7 is a block diagram of the rotating display device according to the present disclosure.

Hereinafter, a configuration for driving the rotating display device will be described briefly with reference to FIG. 7. Although this configuration will be described with reference to the first embodiment described above, the same may also be identically applied to the second embodiment.

First, a driving circuit 210 may be mounted to the fixed portion 100. The driving circuit 120 may include a power supply. The driving circuit 120 may include a wireless power transmitter 121, a DC-DC converter 122, and a voltage generator 123 for supplying individual voltages.

External power may be supplied to the driving circuit 120 and the motor 110.

In addition, an RF module 126 may be provided at the fixed portion 100, so that the display may be driven in response to a signal transmitted from the outside.

Meanwhile, a means for sensing rotation of the rotary portion 200 may be provided at the fixed portion 100. Infrared radiation may be used to sense rotation. Accordingly, an IR emitter 125 may be mounted to the fixed portion 100, and an IR receiver 215 may be mounted to the rotary portion 200 at a position corresponding to the IR emitter 125.

In addition, a (micro) controller 124 may be provided at the fixed portion 100 in order to control the driving circuit 120, the motor 110, the IR emitter 125, and the RF module 126.

Meanwhile, the rotary portion 200 may include a wireless power receiver 211 for receiving a signal from the wireless power transmitter 121, a DC-DC converter 212, and a voltage generator (LDO) 213 for supplying individual voltages.

The rotary portion 200 may be provided with an image processor 216 in order to realize an image through the light-emitting element array using RGB data of an image to be displayed. The signal processed by the image processor 216 may be transmitted to the drivers 314 of the light source device, and thus an image may be realized.

In addition, a controller 214 may be mounted to the rotary portion 200 in order to control the wireless power receiver 211, the DC-DC converter 212, the voltage generator (LDO) 213, the IR receiver 215, and the image processor 216.

The image processor 216 may generate a signal for controlling light emission from the light sources of the light source device based on data of an image to be output. At this time, the data for light emission from the light source device may be internal data or external data.

The data stored in the internal device (the rotary portion 200) may be image data pre-stored in a storage device, such as a memory (an SD-card) mounted together with the image processor 216. The image processor 216 may generate a light emission control signal based on the internal data.

The image processor 216 may transmit control signals to the drivers 314 so that the first light-emitting element arrays 311 and the second light-emitting element arrays 341, 351, and 361 display image data of a specific frame in a delayed manner.

Meanwhile, the image processor 216 may receive image data from the fixed portion 100. At this time, external data may be output through an optical data transmission device, such as a photo coupler, or an RF-type data transmission device, such as a Bluetooth or Wi-Fi device.

In this case, as mentioned above, a means for sensing rotation of the rotary portion 200 may be provided. That is, the IR emitter 125 and the IR receiver 215 may be provided as a means for detecting the rotational position (speed) of the rotary portion 200, such as an absolute rotational position or a relative rotational position, in order to output light source data suitable for each rotational position (speed) during rotation of the rotary portion 200. Alternatively, this function may also be achieved using an encoder, a resolver, or a Hall sensor.

Meanwhile, data required to drive the display may be transmitted as a signal in an optical manner at low cost using the principle of a photo coupler. That is, if the fixed portion 100 and the rotary portion 200 are provided with a light emitter and a light receiver, reception of data is continuously possible even when the rotary portion 200 rotates. Here, the IR emitter 125 and the IR receiver 215 described above may be used to transmit data.

As described above, power may be transferred between the fixed portion 100 and the rotary portion 200 in a wireless power transfer (WPT) manner.

Wireless power transfer enables the supply of power without connection of a wire using a resonance phenomenon of a coil.

To this end, the wireless power transmitter 121 may convert power into an RF signal of a specific frequency, and a magnetic field generated by current flowing through the transmission coil 130 may generate an induced current in the reception coil 220.

At this time, the natural frequency of the coil and the transmission frequency for transferring actual energy may differ from each other (a magnetic induction method).

Meanwhile, the resonant frequencies of the transmission coil 130 and the reception coil 220 may be the same (a magnetic resonance method).

The wireless power receiver 211 may convert the RF signal input from the reception coil 220 into direct current, and may transmit required power to a load.

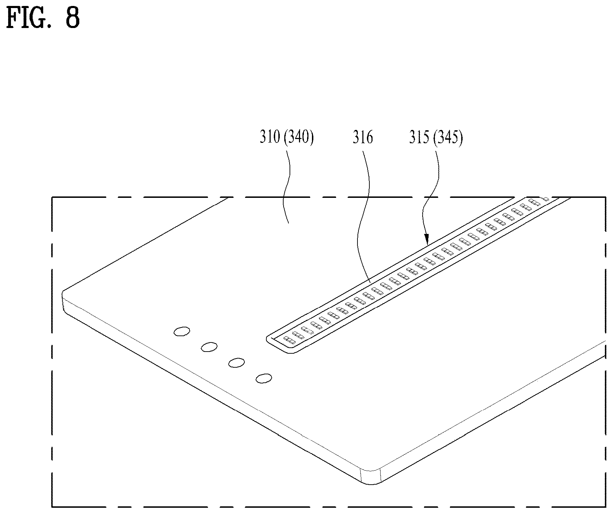

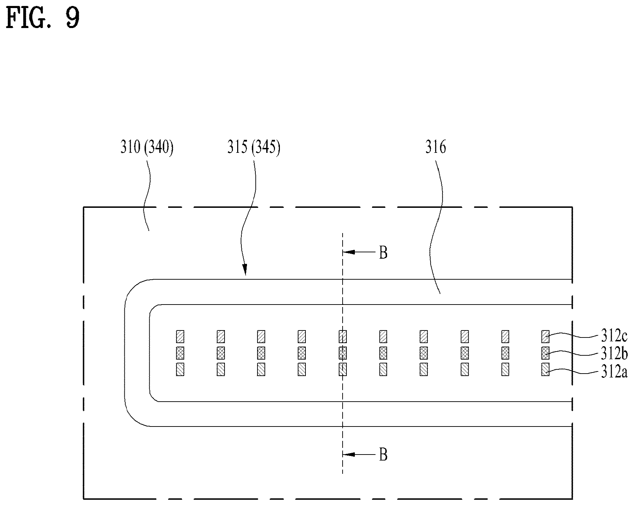

FIG. 8 is a perspective view illustrating the front surface of the light source device according to the second embodiment of the present disclosure. FIG. 9 is a plan view illustrating the front surface of the light source device according to the second embodiment of the present disclosure.

Although the present disclosure is described based on the first panel 310 of the rotating display device according to the first embodiment in FIGs 8 and 9, the present disclosure may also be similarly applied to the other panels 320 and 330. Furthermore, the present disclosure may be also be applied to the rotating display device according to the second embodiment. In other words, the light source device according to the first embodiment and the light source device according to the second embodiment may have the same configuration.

In other words, each of the first panels 310, 320 and 330 of the rotating display device according to the first embodiment may include a third light-emitting element array 315 according to this embodiment, and each of the second panels 340, 350 and 36 of the rotating display device according to the second embodiment may include a fourth light-emitting element array 345 according to this embodiment. Here, the third light-emitting element array 315 and the fourth light-emitting element array 345 may have the same configuration. In other words, the light source device, which will be described hereinafter, may be equally applied to both the first panels 310, 320 and 330 of the rotating display device according to the first embodiment and the second panels 340, 350 and 360 of the rotating display device according to the second embodiment. Hereinafter, the first panel 310 (or the second panel 340) will be described as a representative.

FIG. 8 illustrates one panel 310 constituting the light source device 300. As described above, the panel 310 may be a printed circuit board (PCB). Referring to FIG. 9, the panel 310 may be provided thereon with a plurality of light-emitting elements 312, which constitute individual pixels and therefore constitute the third light-emitting element array 315 (or the fourth light-emitting element array 345). Here, the light-emitting elements may be embodied as a light-emitting diode (LED). Here, the light-emitting element and the individual pixels may mean the same. Accordingly, the light-emitting element and the individual pixels may be noted by the same reference numeral.

Referring to FIG. 9, light-emitting elements may be arranged on the panel 310 in the longitudinal direction of the panel 310 so as to constitute the individual pixels 312, which are arranged linearly so as to constitute the third light-emitting element array 315.

Each pixel 312 may include, for example, three subpixels 312a, 312b, and 312c. The subpixels may include a red subpixel 312a, a green subpixel and a blue subpixel 312c. Because the three subpixels 312a, 312b, and 312c constitute the three primary colors of light, the subpixels may represent natural colors.

As illustrated in the drawing, the subpixels 312a, 312b, and 312c of each pixel 312 are arranged in a direction perpendicular to the longitudinal direction of the panel 310. In other words, the individual pixels 312 are arranged in the longitudinal direction of the panel 310, and the subpixels 312a, 312b, and 312c of each pixel 312 are arranged in a direction perpendicular to the longitudinal direction of the panel 310.

When each of the subpixels 312a, 312b, and 312c has a rectangular shape, the long side of the rectangular shape may be perpendicular to the longitudinal direction of the panel 310.

A partition wall 316 may be provided so as to be positioned on the panel 310 on at least one side of each pixel 312 constituting the third light-emitting element array 315.

The partition wall 316 may be positioned at least in the direction in which the light source device 300 or 301 is rotated. In other words, the partition wall 316 may be provided at least in the direction in which the panel 310 is rotated.

In the case in which the red subpixel 312a of each pixel 312 is positioned in the direction in which the light source device is rotated, that is, in the case in which the red subpixel 312a is first visible to a viewer who is viewing the rotating display device upon rotation of the light source device 300 or 301, the partition wall 316 may be positioned beside the red subpixel 312a. In other words, the partition wall 316 may be positioned adjacent to the red subpixel 312a (the case in which the partition wall 316 is positioned only on one side of each pixel 312 is not additionally shown).

Meanwhile, the partition wall 316 may also be positioned on two opposite sides of each pixel 312. In other words, the partition wall 316 may be positioned in the direction in which the panel 310 is rotated or in the opposite direction.

Specifically, in the case in which the red subpixel 312a of each pixel 312 is positioned in the direction in which the panel 310 is rotated and the green subpixel 312b and the blue subpixel 312c are sequentially positioned adjacent to the red subpixel 312a, the partition wall 316 may be positioned beside the red subpixel 312a and the blue subpixel 312c. FIG. 8 and 9 illustrate an embodiment in which the partition wall 316 is positioned adjacent to the red subpixel 312a and the blue subpixel 312c.

As illustrated in the drawing, the partition wall 316 may be continuously positioned along the third light-emitting element array 315. Furthermore, the partition wall 316 may be formed so as to surround the third light-emitting element array 315.

Here, the partition wall 316 may be positioned so as to be spaced apart from a subpixel of the third light-emitting element array 315 adjacent thereto by a predetermined distance.

The partition wall 316 has a predetermined height.

Specifically, the height of the partition wall 316 is set such that the light emitted from the subpixel adjacent to the partition wall 316 (the red subpixel 312a in this embodiment) is not directed in the direction of the partition wall 316 but is absorbed and reflected by the partition wall 316. This will be described in detail later with reference to the accompanying drawings.

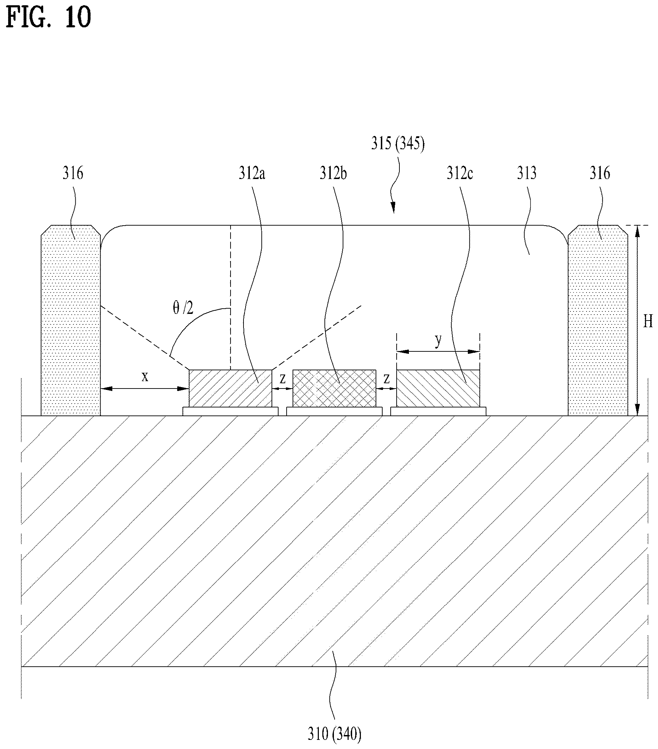

FIG. 10 is a cross-sectional view taken along line B-B in FIG. 9.

Referring to FIG. 10, each pixel (312a, 312b, and 312c) has a predetermined width y and a predetermined height H, and each pixel includes a plurality of subpixels for representing natural colors.

As described above, the subpixels generally include red (R), green (G), and blue (B) subpixels 312a, 312b, and 312c, which are the three primary colors of light, to realize colors. Here, the red (R), green (G), and blue (B) subpixels 312a, 312b, and 312c are distinguished from each other by shading. In this specification and in the drawings, each of the shades may indicate a corresponding one of the red (R), green (G), and blue (B) subpixels.

As described above, the subpixels 312a, 312b, and 312c of each pixel 312 are oriented perpendicular to the longitudinal direction of the panel 310. In other words, the individual pixels 312 are arranged in the longitudinal direction of the panel 310, and the subpixels 312a, 312b, and 312c are arranged in a direction perpendicular to the longitudinal direction of the panel 310.

In the case in which each of the subpixels 312a, 312b, and 312c has a rectangular shape, the long side of the rectangular shape may be perpendicular to the longitudinal direction of the panel 310.

FIG. 10 illustrates an embodiment in which the partition wall 316 is positioned on two opposite sides of the subpixels 312a, 312b, and 312c. In the above-described arrangement of pixels, the direction in which the light source device 300 or 301 is rotated may be the leftward direction. In other words, it is thought that the red subpixel 312a is positioned in the direction in which the light source device 300 or 301 is rotated. The green subpixel 312b and the blue subpixel 312c may be positioned adjacent to the red subpixel 312a.

Here, the partition wall 316 may be provided adjacent to the red subpixel 312a, and may be provide adjacent to the blue subpixel 312c. A molded portion 313 may be positioned on the individual subpixels 312a, 312b, and 312c between the partition walls provided on the two opposite sides. The molded portion 313 may be made of a transparent resin such as silicone.

Although it is preferable that the partition wall 316 have a black color capable of absorbing the light emitted from the subpixels adjacent to the partition wall 316, the partition wall 316 may also have a color other than the black color, for example, a white color. In other words, although it is most preferable that the partition wall 316 have a black color, the partition wall 316 may also have a white color in the case where an advantageous effect is conveyed.

Generally, an LED light source may exhibit a perceived color that varies depending on the position of the light-emitting element (a LED chip) and on the angle at which a viewer views the LED light source. Accordingly, because the rotating display device realize a display by rotation of the light source device 300 or 301, there may be a difference between the color of the rotating display device when a viewer views the display device from a position in front of the display device and the color of the rotating display device when the viewer views the display device from the side of the display device.

The partition wall 316 blocks light emitted from the lateral surface of the light-emitting element 312 such that the light is emitted only toward the front side, that is, toward a viewer, thereby preventing variation in the color caused by a change in the angle from which the viewer views the light-emitting element and thus realizing the same perceived color of the light-emitting element regardless of the position of the viewer.

The light-emitting element (the subpixels 312a, 312b, and 312c in this embodiment) has a certain viewing angle (or a directivity angle) $\theta$. In other words, the light may be emitted from the light-emitting element within a certain viewing angle (or a directivity angle) $\theta$. The viewing angle of the light-emitting element may be, for example, 120 degrees. In only one side of the light-emitting element, the light-emitting element may have a lateral component at a tangent of 60 degrees.

Consequently, the minimum height H of the partition wall 316, which is set such that the light emitted from the subpixel adjacent to the partition wall 316 (the red subpixel 312a in this embodiment) is not directed in a direction of the partition wall 316 but is absorbed and reflected by the partition wall 316, as described above, is represented by the following equation 1.

[Equation 1]

$$H = (y + x) * \tan(90 - \theta/2)$$

wherein H is the height of the partition wall 316, y is the width of the subpixel adjacent thereto (the red subpixel 312a in this embodiment), x is the distance between the partition wall 316 and the adjacent subpixel 312a, and θ is the viewing angle (or the directivity angle) of the adjacent subpixel 312a.

Furthermore, z is the distance between the subpixels 312a, 312b, and 312c.

When the partition wall 316 has the height defined by Equation 1 or more, the partition wall 316 is capable of blocking the light emitted from the lateral surface of the light-emitting element 312 such that the light emitted from the light-emitting element 312 is directed only toward the front side, that is, toward a viewer (in the upward direction of the light-emitting element 312), thereby preventing variation in color caused by a change in the angle at which the viewer views the light-emitting element and thus realizing the same perceived color of the display regardless of the position of the viewer. The effects of the present disclosure will be described in detail with reference to the accompanying drawings.

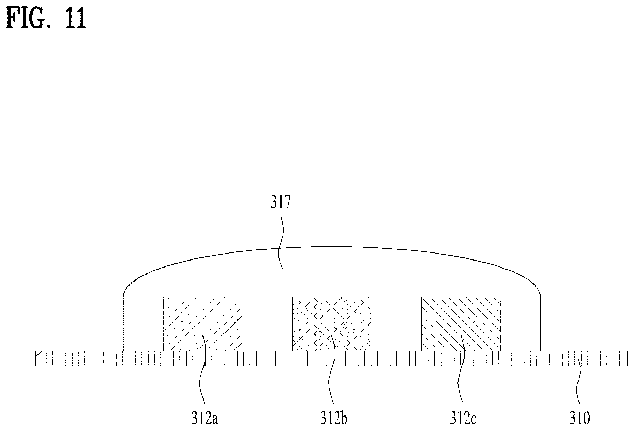

FIG. 11 is a cross-sectional view illustrating a light source device of a typical rotating display device. The light source device may correspond to the light source device shown in FIG. 10.

In the light source device of the typical rotating display device shown in FIG. 11, the subpixels 312a, 312b, and 312c may be positioned on the panel 310. Here, the subpixels 312a, 312b, and 312c may be protected by a molded portion 317. The molded portion 317 may be made of a transparent resin such as silicone. The molded portion 317 may have a gently curved dome shape.

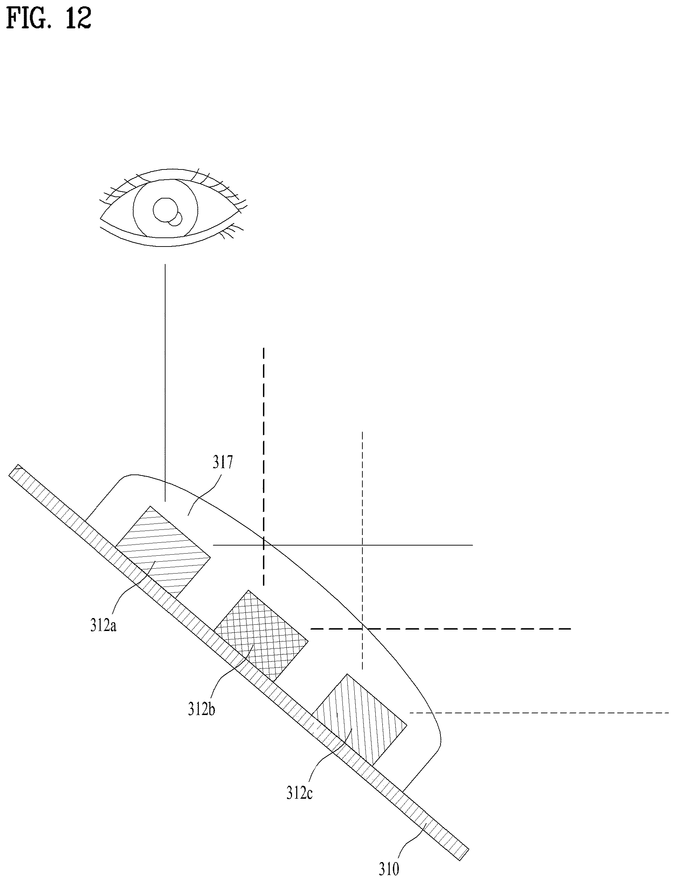

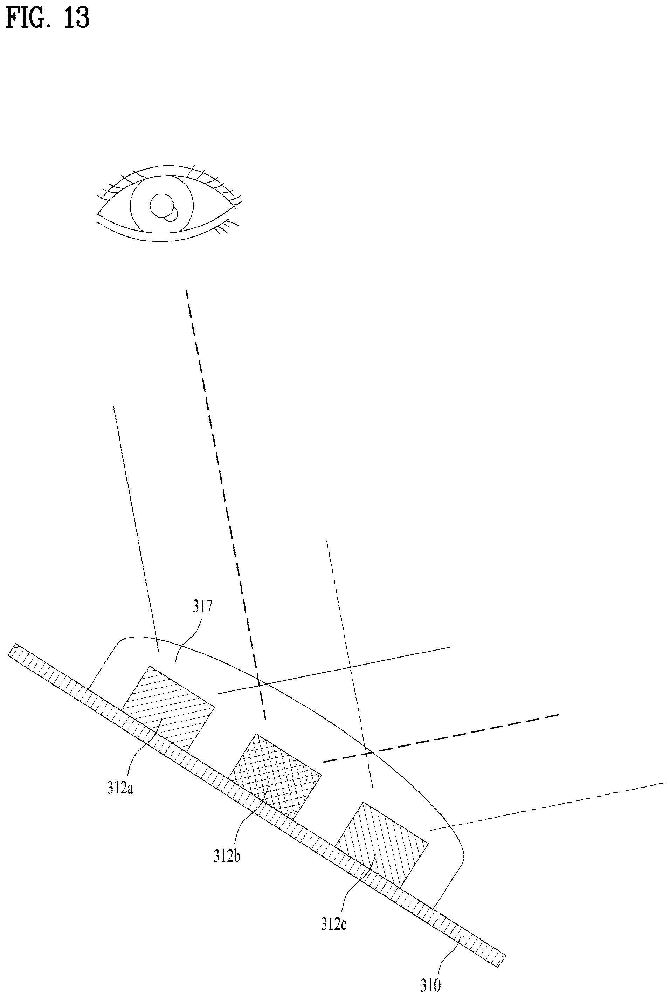

FIGs. 12 and 13 are schematic views illustrating the state in which a viewer views the light source device of the typical rotating display device over time.

As described above, the light source element (the subpixels 312a, 312b, and 312c in this embodiment) has a certain viewing angle (or a directivity angle) θ. In other words, light may be emitted from the light-emitting element within a certain viewing angle (or a directivity angle) θ. The viewing angle of the light-emitting element may be, for example, 120 degrees.

When the typical rotating display device including the light source device is operated, the panel 310 of the light source panel 310 is rotated, whereby, temporarily, the red subpixel 312a is visible to a viewer but the green subpixel 312b and the blue subpixel 312c are not visible to the viewer, as illustrated in FIG. 12.

Subsequently, when the panel 310 of the light source device is rotated further, not only the red subpixel 312a but also the green subpixel 312b and the blue subpixel 312c are visible to the viewer, whereby the red, green and blue colors are mixed with one another and the resultant mixed color is seen by the viewer.

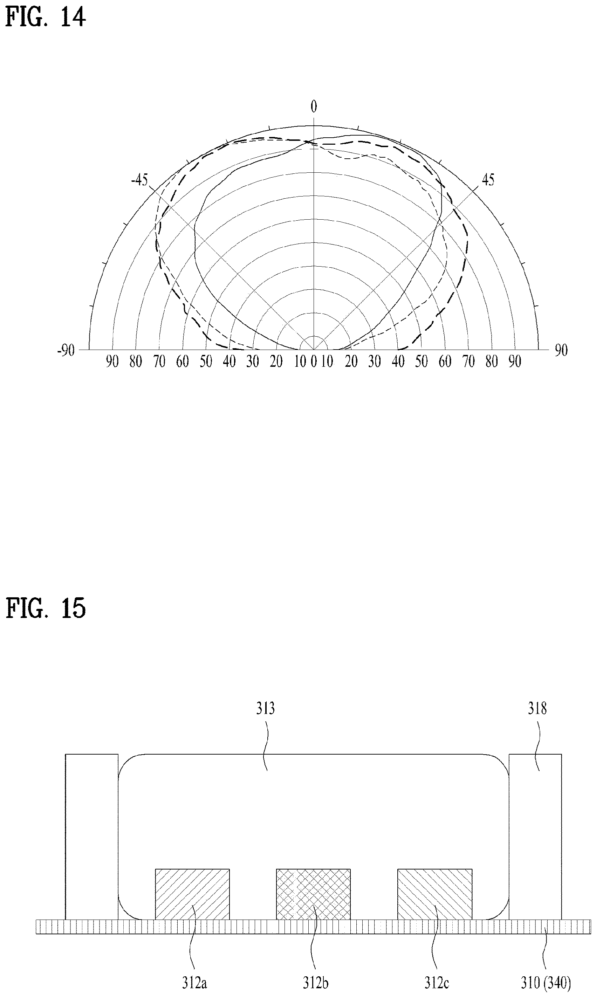

FIG. 14 is a graph illustrating a pattern of a directivity angle when a viewer views the light source device of the typical rotating display device.

For the above-mentioned reason, the times during which the red, green, and blue light are visible to the viewer do not exactly coincide with one another when the light source device of the typical rotating display device is operated.

In FIG. 14, the red light is represented by a solid line, the green light is represented by a bold dotted line, and the blue light is represented by a thin dotted line. In other words, FIG. 14 shows an inclination in which the lines representing the colors do not coincide with one another. Particularly, it will be appreciated that the inclination greatly increases at 45 degrees or -45 degrees.

Consequently, a viewer may experience a phenomenon in which some of the colors of an image are intensified at a certain time point or over time. For example, an image may be sensed as a red color or a blue color.

FIG. 15 is a cross-sectional view illustrating a light source device according to a third embodiment of the present disclosure. The light source device may correspond to the light source device shown in FIG. 10.

Referring to FIG. 15, each of individual pixels 312a, 312b, and 312c may have a certain width and height, and may include a plurality of subpixels for representing natural colors.

As described above, generally, the subpixels may include the red (R), green (G), and blue (B) subpixels 312a, 312b, and 312c, and may realize various natural colors by combining the three primary colors of light.

As described above, the subpixels 312a, 312b, and 312c of each pixel 312 are arranged in a direction perpendicular to the longitudinal direction of the panel 310. In other words, the individual pixels are arranged in the longitudinal direction of the panel 310, and the subpixels 312a, 312b, and 312c of each of the pixels 312 are arranged in a direction perpendicular to the longitudinal direction of the panel 310.

FIG. 15 illustrates the state in which the partition wall 318 is positioned on two lateral sides of the subpixels 312a, 312b, and 312c. Here, the partition wall 317 may be disposed at a location that is spaced apart from the adjacent one of the subpixels 312a, 312b, and 312c by a certain distance.

The partition wall 318 has a certain height.

Specifically speaking, the height of the partition wall 318 is set such that the light emitted from the subpixels adjacent to the partition wall 318 (that is, the red subpixel 312a and the blue subpixel 312c in this embodiment) is absorbed and reflected by the partition wall 318.

The partition wall 318 may be made so as to have a white color or a transparent color. Other details thereof may be identical to those of the light source device according to the second embodiment, which have been described above. Accordingly, redundant description thereof is omitted, and the description of details of the light source device according to the second embodiment may be similarly applied to details that have not been described herein.

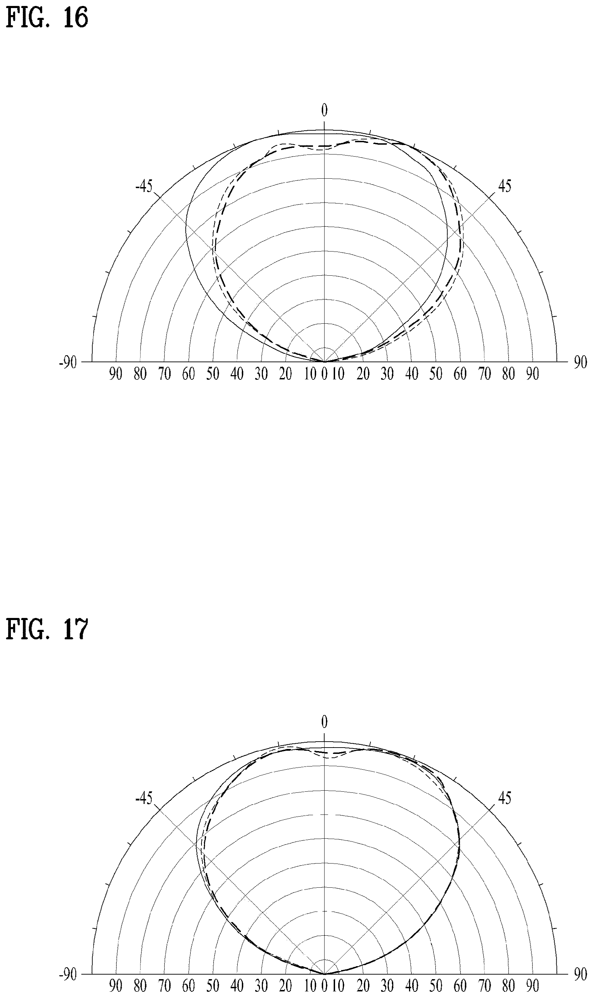

FIG. 16 is a graph illustrating a pattern of a directivity angle when a viewer views the light source device according to the second embodiment of the present disclosure.

Referring to FIG. 16, it will be appreciated that the pattern of the directivity angle (or viewing angle) is greatly improved compared to that of a typical rotating display device shown in FIG. 14.

In FIG. 16, the red light is represented by a solid line, the green light is represented by a bold dotted line, and the blue light is represented by a thin dotted line. Particularly, it will be appreciated that the directivity angle of the green light almost perfectly coincides with the directivity of the blue light.

When the partition wall 318 has the height defined by Equation 1 or more even when the partition wall 318 is made so as to have a white color, the partition wall 318 blocks the light emitted from the lateral surface of the light-emitting element 312 such that the light emitted from the light-emitting element is directed only toward the front side, that is, toward a viewer (in the upward direction of the light-emitting element 312), thereby preventing variation in color caused by a change in the angle at which a viewer views the light-emitting element and thus realizing the same perceived color of the light-emitting element regardless of the position of the viewer.

FIG. 17 is a graph illustrating a pattern of a directivity angle when a viewer views the light source device according to the first embodiment of the present disclosure.

In other words, FIG. 17 illustrates a pattern of a directivity angle of the first embodiment, which has been described above with reference to FIG. 10.

In FIG. 17, the red light is represented by a solid line, the green light is represented by a bold dotted line, and the blue light is represented by a thin dotted line. Here, it will be appreciated that the directivity angle of the red light, the directivity angle of the green light, and the directivity of the blue light coincide with one another.

As described above, the partition wall 316 is capable of blocking the light emitted from the lateral surfaces of some of the subpixels. Consequently, because the rotating display device according to the present disclosure enables the light emitted from the light-emitting element to be directed only toward the front side, that is, toward a viewer (in the upward direction of the light-emitting element 312), it is possible to prevent variation in color caused by a change in the angle at which a viewer views the light-emitting element and to realize the same perceived color of the display device regardless of the position of the viewer.

## INDUSTRIAL APPLICABILITY

According to the present disclosure, it is possible to provide a rotating display device using light-emitting diodes (LEDs), which are semiconductor light-emitting elements.

## Claims

1. A rotating display device using a light-emitting element comprising:

   a fixed portion (100) including a motor (110);
   a rotary portion (200) positioned on the fixed portion (100) and arranged to be rotated by the motor (110); and
   a light source device (300) coupled to the rotary portion (200) so as to realize a display using an after-image while being rotated together with the rotary portion (200),
   wherein the light source device (300) comprises:

   at least one panel disposed in a radial direction thereof or on a circumferential surface thereof;
   a light-emitting element array (311) including pixels arranged on the panel in a longitudinal direction of the panel; and
   a partition wall (316) positioned on the panel on at least one side of each of the pixels,
   wherein each of the pixels of the light source device (300) includes subpixels arranged in a direction perpendicular to the longitudinal direction of the panel, and
   wherein the partition wall (316) has a height higher than $H = (y + x) * \tan(90-\theta/2)$, wherein H is a height of the partition wall (316), y is a width of each subpixel, x is a distance between the partition wall (316) and a subpixel adjacent to the partition wall, and $\theta$ is a viewing angle of the subpixel adjacent to the partition wall (316).

2. The rotating display device of claim 1, wherein the partition wall (316) is positioned in a direction in which the light source device (300) is rotated.

3. The rotating display device of claim 1, wherein the partition wall (316) is positioned at two lateral sides of each of the pixels.

4. The rotating display device of claim 3, wherein the partition wall (316), which is positioned at the two lateral sides of each of the pixels, is positioned relative to each of the pixels in a direction in which the light source device is rotated and in a direction opposite the direction in which the light source device (300) is rotated.

**5.** The rotating display device of claim 1, wherein the partition wall (316) is continuously positioned along the light-emitting element array (311).

**6.** The rotating display device of claim 1, wherein the partition wall (316) has a black color.

## Patentansprüche

**1.** Rotierende Anzeigevorrichtung mit einem lichtemittierenden Element, umfassend:

einen festen Abschnitt (100), der einen Motor (110) beinhaltet;
einen rotierenden Abschnitt (200), der auf dem festen Abschnitt (100) positioniert und so angeordnet ist, dass er durch den Motor (110) rotiert werden kann; und
eine Lichtquellenvorrichtung (300), die mit dem rotierenden Abschnitt (200) gekoppelt ist, um eine Anzeige mit einem Nachbild zu realisieren, während sie zusammen mit dem rotierenden Abschnitt (200) rotiert wird,
wobei die Lichtquellenvorrichtung (300) Folgendes umfasst:

mindestens eine Platte, die in einer radialen Richtung davon oder auf einer Umfangsfläche davon angebracht ist;
eine lichtemittierende Elementanordnung (311), die Pixel beinhaltet, die auf der Platte in einer Längsrichtung der Platte angeordnet sind; und
eine Trennwand (316), die auf der Platte auf mindestens einer Seite von jedem der Pixel positioniert ist,
wobei jedes der Pixel der Lichtquellenvorrichtung (300) Subpixel beinhaltet, die in einer Richtung senkrecht zur Längsrichtung der Platte angeordnet sind, und
wobei die Trennwand (316) eine Höhe aufweist, die größer als $H = (y + x) * \tan(90-\theta/2)$ ist, wobei H eine Höhe der Trennwand (316) ist, y eine Breite jedes Subpixels ist, x ein Abstand zwischen der Trennwand (316) und einem Subpixel ist, das benachbart zu der Trennwand liegt, und $\theta$ ein Betrachtungswinkel des Subpixels ist, das benachbart zu der Trennwand (316) liegt.

**2.** Rotierende Anzeigevorrichtung nach Anspruch 1, wobei die Trennwand (316) in einer Richtung positioniert ist, in der die Lichtquellenvorrichtung (300) rotiert wird.

**3.** Rotierende Anzeigevorrichtung nach Anspruch 1, wobei die Trennwand (316) an zwei lateralen Seiten von jedem der Pixel positioniert ist.

**4.** Rotierende Anzeigevorrichtung nach Anspruch 3, wobei die Trennwand (316), die an den zwei lateralen Seiten von jedem der Pixel positioniert ist, relativ zu jedem der Pixel in einer Richtung, in der die Lichtquellenvorrichtung rotiert wird, und in einer Richtung entgegengesetzt zu der Richtung, in der die Lichtquellenvorrichtung (300) rotiert wird, positioniert ist.

**5.** Rotierende Anzeigevorrichtung nach Anspruch 1, wobei die Trennwand (316) entlang der lichtemittierenden Elementanordnung (311) durchgehend positioniert ist.

**6.** Rotierende Anzeigevorrichtung nach Anspruch 1, wobei die Trennwand (316) eine schwarze Farbe aufweist.

## Revendications

**1.** Dispositif d'affichage rotatif utilisant un élément émetteur de lumière comprenant :

une partie fixe (100) comportant un moteur (110) ;
une partie rotative (200) positionnée sur la partie fixe (100) et agencée pour être tournée par le moteur (110) ; et
un dispositif de source de lumière (300) accouplé à la partie rotative (200) de manière à réaliser un affichage au moyen d'une image après tout en étant tourné conjointement avec la partie rotative (200),
dans lequel le dispositif de source de lumière (300) comprend :

au moins un panneau disposé dans une direction radiale de celui-ci ou sur une surface circonférentielle de celui-ci ;
un réseau d'éléments émetteurs de lumière (311) comportant des pixels agencés sur le panneau dans une direction longitudinale du panneau ; et
une paroi de séparation (316) positionnée sur le panneau sur au moins un côté de chacun des pixels,
dans lequel chacun des pixels du dispositif de source de lumière (300) comporte des sous-pixels agencés dans une direction perpendiculaire à la direction longitudinale du panneau, et
dans lequel la paroi de séparation (316) présente une hauteur supérieure à $H = (y$

+ x) * tan(90-θ/2), dans lequel H est une hauteur de la paroi de séparation (316), y est une largeur de chaque sous-pixel, x est une distance entre la paroi de séparation (316) et un sous-pixel adjacent à la paroi de séparation, et θ est un angle de visualisation du sous-pixel adjacent à la paroi de séparation (316).

2. Dispositif d'affichage rotatif selon la revendication 1, dans lequel la paroi de séparation (316) est positionnée dans une direction dans laquelle le dispositif de source de lumière (300) est tourné.

3. Dispositif d'affichage rotatif selon la revendication 1, dans lequel la paroi de séparation (316) est positionnée au niveau de deux côtés latéraux de chacun des pixels.

4. Dispositif d'affichage rotatif selon la revendication 3, dans lequel la paroi de séparation (316), qui est positionnée au niveau des deux côtés latéraux de chacun des pixels, est positionnée par rapport à chacun des pixels dans une direction dans laquelle le dispositif de source de lumière est tourné et dans une direction opposée à la direction dans laquelle le dispositif de source de lumière (300) est tourné.

5. Dispositif d'affichage rotatif selon la revendication 1, dans lequel la paroi de séparation (316) est positionnée en continu le long du réseau d'éléments émetteurs de lumière (311).

6. Dispositif d'affichage rotatif selon la revendication 1, dans lequel la paroi de séparation (316) présente une couleur noire.

# FIG. 1

# FIG. 2

FIG. 3

310

311

A

FIG. 4

314

310

FIG. 5

FIG. 6

# FIG. 7

EP 4 057 264 B1

FIG. 8

310 (340)    316    315 (345)

FIG. 9

310 (340)　　　315 (345)　　　　　316

312c
312b
312a

FIG. 10

FIG. 11

317

312a    312b    312c    310

FIG. 12

317

312a

312b

312c

310

FIG. 13

317

312a

312b

312c

310

## FIG. 14

## FIG. 15

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190120553 A

- US 2004222428 A1